(19) Europäisches Patentamt
European Patent Office
Office européen des brevets

(11) EP 0 728 793 A1

(12) DEMANDE DE BREVET EUROPEEN

(43) Date de publication:
**28.08.1996 Bulletin 1996/35**

(51) Int Cl.[6]: **C08G 77/06**, C08G 77/08

(21) Numéro de dépôt: **96420031.5**

(22) Date de dépôt: **30.01.1996**

(84) Etats contractants désignés:
**AT BE CH DE DK ES FR GB GR IE IT LI LU NL PT SE**

(30) Priorité: **31.01.1995 FR 9501309**

(71) Demandeur: **RHONE-POULENC CHIMIE S.A.**
**92408 Courbevoie (FR)**

(72) Inventeurs:
- **Frances, Jean-Marc**
  **F-69330 Meyzieu (FR)**
- **Bourget, Laurence**
  **F-34130 Mauguio (FR)**
- **Vioux, André**
  **F-34980 Montferrier (FR)**
- **Mutin, Pierre Hubert**
  **F-34830 Clapiers (FR)**
- **Leclercq, Dominique**
  **F-34980 Saint-Clement-De Riviere (FR)**

(74) Mandataire: **Fleurance, Raphael**
**Cabinet Beau de Loménie,**
**51, Avenue Jean Jaurès,**
**B.P. 7073**
**69301 Lyon Cédex 07 (FR)**

# (54) Procédé de préparation de résine polyorganosiloxane, éventuellement alcoxylée, par condensation non hydrolytique

(57) La présente invention concerne la synthèse de résines polyorganosiloxanes (POS), éventuellement alcoxylées, par condensation non hydrolytique. Le but visé est de fournir un procédé offrant la possibilité d'une maîtrise de la réticulation. Ce but, parmi d'autres, est atteint par le procédé selon l'invention, qui prévoit la mise en oeuvre d'une condensation non hydrolytique entre des motifs alcoxysilyles (Mo1) et des motifs halogénosilyles (Mo2) portés tous deux par des silanes identiques ou différents, en présence d'un catalyseur du type acide de Lewis, ladite condensation engendrant essentiellement des liaisons ≡ Si—O—Si≡ et des coproduits XR (X = halogène). Ce procédé est caractérisé en ce que les POS visés comprennent des unités siloxyles D, T et/ou Q voire M, en ce que le catalyseur est choisi parmi les composés métalliques ou les mélanges de ceux-ci, à base d'au moins un métal appartenant au groupe IIIB, IVB ou VB de la classification périodique, et en ce que la température réactionnelle et le ratio initial OR/X sont ajustés de telle sorte que la condensation intervienne sensiblement exclusivement entre les motifs Mo1 et Mo2 avec une extrême minimisation de la condensation parasite entre deux alcoxy OR, donnant le sous-produit $R_2O$.

EP 0 728 793 A1

## Description

Le domaine de la présente invention est celui de la synthèse de polyorganosiloxanes (POS), éventuellement alcoxylés, par condensation non hydrolytique. Plus précisément, l'invention vise la mise en réaction de motifs alcoxysilyles Mo1, d'une part, et de motifs Mo2 halogéno - de préférence chloro - silyles, d'autre part, selon un mécanisme de condensation thermique, en l'absence d'eau et en présence d'un catalyseur du type acide de LEWIS. Les motifs Mo1 et Mo2 peuvent appartenir à un même silane de départ et/ou à plusieurs silanes de nature différentes.

Sans que cela ne soit limitatif on peut symboliser la réaction comme suit :

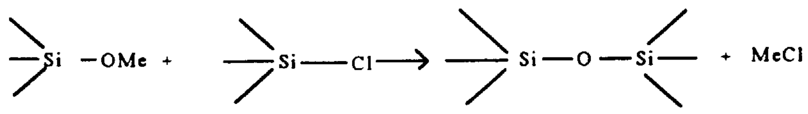

Mo1 Mo2

Cette méthode de synthèse directe de polyorganosiloxanes (POS) est toujours apparue comme particulièrement séduisante, en tant qu'alternative possible aux voies de synthèse indirectes de POS par hydrolyse et/ou alcoolyse de chlorosilanes puis par condensation posthydrolytique. Ces voies indirectes sont les seules mises en oeuvre à l'échelle industrielle. En effet, outre sa simplicité, la voie directe présenterait l'avantage de conduire à des sous-produits réactionnels, qui pourraient, par exemple, être du chlorure de méthyle (MeCl), sous produit recyclable dans l'obtention de méthylchlorosilane produit de base, s'il en est, dans l'industrie des silicones. De plus, cette voie directe en une seule étape devrait permettre la production de résines POS éventuellement alcoxylées sur mesure, par mise en oeuvre d'halogénoalcoxysilanes et/ou d'halogénosilanes et d'alcoxysilanes appropriés. Enfin, il pouvait être escompté que l'ajustage du rapport OR/X=halogène initial, puisse permettre de surcroît, le contrôle du taux de fonction alcoxy dans les résines finales, le cas échéant.

Ces attendus étaient peut être ceux des inventeurs des brevets américains **US N$^{OS}$ 2 485 928 2 695 307, et 2 731 485**, décrivant la condensation non hydrolytique entre des chlorosilanes et des alcoxysilanes ou d'halogénoalcoxysilanes entre eux. Ces condensations s'effectuent en présence de catalyseurs du type acide de LEWIS : $FeCl_3$, $ZnCl_2$ et $AlCl_3$, ainsi qu'$AlCl_3$ et $BCl_3$ respectivement, pour l'obtention de polysiloxanes linéaires ou réticulés.

S'agissant des condensations selon l'**US N° 2 485 928,** il est à noter qu'elles font intervenir de préférence des chloroéthoxydiméthylsilanes, éventuellement des méthyltrichlorosilanes, et le Fe $Cl_3$ exclusivement à titre de catalyseur. Il est même précisé col. 2, 1. 51 - 53 que le $FeCl_3$ est le seul catalyseur souhaitable.

Conformément à l'**US N° 2 695 307**, un halogénoorganosilane est mis à réagir avec un alcoxyorganosilane en présence de chlorures métalliques : Al, Zn (Fe, Ca).

Et le brevet **US n° 2 731 485** décrit des homo ou des hétérocondensations de silanes : Si OR/ Si X, X = halogène (Cl) et R = Et, à très hautes températures 250°C -300°C. Les catalyseurs mis en oeuvre sont : $AlCl_3$ - $BCl_3$. De telles conditions drastiques de température sont nécessairement dommageables. Les inventeurs de ce brevet relèvent la formation d'alkyléthers comme co-produits, sans autres commentaires et sans en tirer des conséquences.

Sans vouloir renier l'intérêt didactique et scientifique de ces brevets connus, il s'est malheureusement avéré que ce genre de réaction de condensation n'est pas exploitable sur le plan industriel. En effet, dès lors que l'on s'est fixé comme objectif selon ces techniques, de préparer des résines polyorganosiloxanes, [éventuellement alcoxylées (e.g. méthoxylées)], composées, notamment, d'unités siloxyles $D(SiO_{2/2})$, $T(SiO_{3/2})$ et/ou $Q(SiO_{4/2})$, voire $M(SiO_{1/2})$, et éventuellement porteuses de radicaux (OR), on s'est trouvé confronté, jusqu'à maintenant, à un grave problème de maîtrise de la réticulation. Cela se traduit notamment par une solidification prématurée et incontrôlable des résines. Un tel inconvénient est très clairement pénalisant dans une perspective de synthèse industrielle, tant il est évident que les produits vitrifiés de manière irréversible sont inutilisables, pour ne citer que cet inconvénient manifeste.

D'ailleurs, le fait que ces brevets relativement anciens n'aient pas eu de suites tant sur le plan scientifique et technique que sur le plan exploitation industrielle et commerciale, est révélateur du préjugé technique défavorable, qui pesait sur la préparation de POS e.g. alcoxylés/par homo ou hétérocondensation non hydrolytique, en présence d'acide de LEWIS en tant que catalyseur.

Nonobstant cela, la demanderesse s'est fixée comme l'un de ses objectifs essentiels, de proposer un procédé de préparation de résines polyorganosiloxanes (éventuellement alcoxylées) par homo ou hétérocondensation non hydrolytique, lequel procédé offrant la possibilité d'un contrôle ou d'une maîtrise de la réticulation, tout en permettant une grande souplesse et une importante liberté de manoeuvre, en ce qui concerne la construction de squelettes POS, alcoxylés ou non, de natures diverses et variées.

Un autre objectif essentiel de l'invention est de fournir un procédé de préparation de résines POS alcoxylées ou non, par condensation non hydrolytique, qui soit de mise en oeuvre simple et économique.

Un autre objectif essentiel de l'invention est de fournir un procédé de préparation de résines polyorganosiloxanes,

éventuellement alcoxylées, par condensation non hydrolytique, qui soit industriellement faisable et qui conduise à des résines techniquement et commercialement exploitables.

Un autre objectif essentiel de l'invention est de permettre la préparation de résines POS liquides, alcoxylées ou non, composées d'unités (D) et (Q) et/ou (T), par hétérocondensation non hydrolytique, d'alcoxysilanes et d'halogénosilanes, en présence d'acide de LEWIS.

Ces objectifs parmi d'autres sont atteints par la présente invention qui concerne un procédé de préparation de résines polyorganosiloxanes (POS), éventuellement alcoxylées (OR), par condensation non hydrolytique au moins entre des motifs alcoxysilyles (Mo1) et des motifs halogénosilyles (Mo2) portés tous deux par des silanes identiques (homocondensation) ou différents (hétérocondensation), en présence d'un catalyseur du type acide de Lewis, ladite condensation engendrant essentiellement des liaisons ≡Si-O-Si≡ et des coproduits XR (X = halogène)

caractérisé,

en ce que les POS visés comprennent des unités siloxyles D, T et/ou Q voire M,

en ce que le catalyseur est choisi parmi les composés métalliques ou les mélanges de ceux-ci, à base d'au moins un métal appartenant au groupe IIIB, IVB ou VB de la classification périodique, donnée dans "LA CHIMIE - dictionnaire Encyclopédique" J. Angenault - Ed DUNOD 08/91.

et en ce que la température réactionnelle et le ratio initial OR/X sont ajustés de telle sorte que la condensation intervienne sensiblement exclusivement entre les motifs Mo1 et Mo2 avec une extrême minimisation de la condensation parasite entre deux alcoxy OR, donnant le sous-produit $R_2O$.

L'un des mérites de la demanderesse est d'avoir mis en évidence, de manière tout à fait surprenante et inattendue qu'il est possible de contrôler la réaction de condensation non hydrolytique, en prenant soin de contenir les réactions secondaires de formation de liaison R-O-R résultant de l'homo ou de l'hétérocondensation des silanes présents dans le milieu (alcoxyhalogénosilanes ou alcoxysilanes et halogénosilanes). Le fait de laisser se dérouler ces réactions secondaires pour mieux les contrôler en jouant sur la sélection du catalyseur, la température réactionnelle et le ratio initial OR/X constitue une disposition originale et inventive du procédé mis au point par la Demanderesse.

Comme cela ressort de ce qui précède, l'invention passe, dans un premier temps, par le renversement du préjugé technique affectant l'hétéro et l'homocondensation non hydrolytique et par la compréhension du phénomène d'homocondensation parasite se surajoutant et emballant la réticulation.

Dans un deuxième temps, la démarche a consisté à identifier les conditions réactionnelles permettant le contrôle de cette condensation parasite, qui peut être symbolisée par la réaction qui suit :

$$2 \equiv \text{Si-OR} \rightarrow \equiv \text{Si-O-Si} \equiv + R_2O$$

Sans vouloir être lié par la théorie, la prise en masse précoce observée dans les réactions selon l'art antérieur doit pouvoir être attribuée à cette réaction secondaire, qui conduit à la formation de ponts siloxanes et donc à l'augmentation du taux de réticulation de la résine. Cette réaction secondaire n'est pas envisagée dans la littérature technique antérieure concernant les réactions d'hétérocondensation Si-OR/Si-X. S'agissant de l'homocondensation des alcoxysilanes Si-OR/Si-OR, elle n'est décrite qu'à des températures beaucoup plus élevées, de l'ordre de 300°C et ce, même en présence d'acide de LEWIS. (Cf. brevet **US Nº 2 731 485**).

Une autre caractéristique importante du procédé selon l'invention, est que les POS visés comprennent des unités siloxyles D, T, et/ou Q voire M. Pour obtenir des D, cela suppose la mise en oeuvre de silanes porteurs à la fois d'un motif Mo1 et d'un motif Mo2, ou bien encore d'une part, de silanes porteurs de deux motifs Mol et d'autre part, de silanes porteurs de deux motifs Mo2. Pour les T, les silanes de départ sont porteurs chacun de 3 Mo identiques ou différents et = Mo1 ou Mo2, de 4 Mo identiques ou différents = Mo1 ou Mo2 pour Q et enfin les M éventuels, les silanes de départ comprennent chacun un motif Mo=Mo1 ou Mo2.

Le procédé de condensation non hydrolytique considéré, se caractérise également en ce qu'aucune réaction n'est observée en l'absence d'halogénosilanes, de préférence chlorosilanes.

Pour préciser un peu plus les choses, en ce qui concerne une disposition importante de l'invention, à savoir la sélection du catalyseur, on peut indiquer que, avantageusement, les composés métalliques utiles comme catalyseur de condensation non hydrolytique, sont :

- des carboxylates,
- des des halogénures,
- des (cyclo)alkylhalogénures,
- des alcoxydes,
- des oxyhalogénures,
- ou leurs mélanges.

En pratique, le catalyseur est, de préférence, sélectionné dans la liste suivante :

$TiCl_4$, $TiBr_4$, $(*PhO)_2$, $TiCl_2$, $*CpTiCl_3$, $Cp_2VCl_2$, $VCl_3$, $VOCl_3$, $ZrCl_4$, $ZrBr_4$, $Zr(OEt)_4$, $Cp_2ZrCl_2$, $Cp_2ZrHcl$, $Cp_2ZrMe_2$, $(C_5Me_5)_2$, $ZrCl_2$, $(C_5Me_5)ZrCl_3$, $(C_5Me_5)ZrCl_3$, $CpZrCl_3$/2-tétrahydrofurane, $HfCl_4$, $NbCl_5$ et leurs mélanges ; les dérivés du Zirconium étant plus particulièrement préférés.

La difficulté à surmonter dans la sélection du catalyseur tient à la recherche d'un bon compromis entre vitesse de condensation et sélectivité. Pour ce faire, on peut, par exemple. utiliser le ratio $[(R)_2O]/[RX]$ comme critère d'appréciation de la sélectivité, sachant que ce rapport sera d'autant plus fort que la sélectivité sera faible. Et on appréhendera, par exemple, la cinétique au travers du taux d'avancement de la réaction déterminée par rapport aux RCl formés après un certain temps.

Etant donné que la vitesse de réaction augmente beaucoup plus rapidement avec la température que le taux de $R_2O$, il est possible d'ajuster la vitesse de la réaction sans modifier de manière sensible la composition de la résine ou des gaz.

Conformément à l'invention, la condensation principale ≡ SiX / ≡ SiOR, qui est doublée d'une homocondensation parasite ≡ SiOR / ≡ SiOR, se déroule dans des conditions thermiques particulières. Ainsi, la température réactionnelle est avantageusement fixée à une valeur comprise entre 70 et 210 °C de préférence entre 100 et 180 °C et plus préférentiellement encore entre 130 et 150 °C.

Pour éviter que les réactions secondaires d'homocondensation ≡ SiOR / ≡ SiOR ne s'expriment de manière trop prononcée, et donc néfaste pour la bonne marche du procédé, on sélectionne le catalyseur approprié par exemple parmi ceux évoqués ci-avant, et l'on ajuste la température réactionnelle de manière à ce que le taux moyen de $R_2O$, sous-coproduit de la formation des ≡ Si-O-Si ≡, reste inférieur à 10 % en poids de préférence à 5 % en poids et plus préférentiellement encore à 4 % en poids par rapport au coproduit RX.

Il est intéressant de souligner que la condensation non hydrolytique considérée peut être effectuée en vase clos, selon une variante préférée du procédé selon l'invention.

A titre d'alternative, il est également envisageable de prévoir une évacuation ou une vidange des gaz formés en cours de réaction. Ladite évacuation peut s'envisager en continu ou non.

Selon un mode préféré de mise en oeuvre du procédé de l'invention, on utilise des silanes susceptibles de donner naissance après condensation à des unités siloxyles D et T ou D et Q ainsi qu'un catalyseur à base de Zr et l'on fixe le ratio molaire r = OR /X initial en deçà ou au dessus d'une valeur charnière $r_c$, selon que l'on vise à obtenir une résine solide ou liquide respectivement.

A chaque catalyseur, correspond un ratio $r_c$ définissant le point critique de gélification de la résine obtenue en final, au travers de proportions pondérales des réactifs de départ.

A titre d'exemple, on peut indiquer que, pour un catalyseur du type $ZrCl_4$, $r_c$ est environ égal à 1,35.

S'agissant des durées réactionnelles, il est préférable qu'elles soient comprises entre 1 et 30 heures, pour être compatibles avec des impératifs industriels de productivité.

Les réactifs de départ préférés conformément à l'invention sont, d'une part des alcoxyorganosilanes comportant chacun au moins un Mo1 à l'exclusion de Mo2 et, d'autre part des halogénoorganosilanes comportant chacun au moins un Mo2 à l'exclusion de Mo1.

A titre d'exemple pratique et non limitatif, on précise que l'on peut mettre en oeuvre comme produits de départ :

* au moins un alcoxysilane répondant à la formule suivante :

$$(R^1)_{4-n}\ Si(OR)_n$$

avec R, $R^1$ identiques ou différents et représentant l'hydrogène ou un radical hydrocarboné, de préférence alkyle et/ou alcényle et/ou aryle et plus préférentiellement encore méthyle, éthyle ou propyle, butyle, phényle (méth)acrylate, époxydé, ou vinylique, le méthyle étant plus particulièrement préféré, et n = 1 à 4.

* et au moins un halogénosilane de formule :

$$R^2{}_{4-m}Si\ (X)_m$$

avec X = halogène, de préférence Cl, $R^2$ répondant à la même définition que celle donnée supra pour R, $R^1$ et m = 1 à 7.

Suivant une disposition intéressante de l'invention, les résines POS préparées comportent des fonctions alcoxy résiduelles, portées par des siloxyles D, T et/ou Q.

Ces fonctions résiduelles offrent l'opportunité de procéder à des greffages de fonctionnalités chimiques diverses, par exemple réticulantes du type de celles éthyléniquement insaturées (vinyle, (méth)acrylate, e.g.) ou époxydes (glycidyle, éthylépoxycyclohexyle). L'hydrogène pourrait également substituer certaines des OR résiduels.

Il est à noter que la fonctionnalisation de ces résines peut également provenir des substituants $R^1$, $R^2$ initiaux des

**Ph = Phényle et Cp=Cyclopentadiène.*

siliciums, ainsi que des radicaux R des OR n'ayant pas réagi. Les fonctionnalités chimiques concernées sont les mêmes que celles évoquées ci-dessus.

Outre les motifs (Mo1) et (Mo2), la condensation selon l'invention peut faire intervenir, selon une variante, des motifs métalliques (Mo3) se présentant, de préférence, sous forme d'alcoxydes métalliques et/ou de sels métalliques tels que les chlorures, par exemple.

Cela permet d'introduire en final dans la résine POS, des éléments métalliques tels que des lanthanides (e.g. le Cérium), le titane, le fer, le zirconium ou leurs mélanges entre autres.... On obtient ainsi des résines POS mixtes(Si/métal).

En pratique, les réactifs porteurs de (Mo3) tels que les alcoxydes et/ou les sels métalliques peuvent être incorporés, en quantité non négligeable, dans le milieu réactionnel de départ, par exemple jusqu'à des concentrations de 80 % molaire, de préférence 50 % molaire.

Pour compléter l'éventail des réactifs de départ envisageables dans le procédé selon l'invention, il est intéressant de noter que l'on peut ajouter des motifs (D) par l'intermédiaire e.g. :

* de POS cycliques, de préférence des oligomères $D_t$ (avec t = nombre de silicium dans le cycle, avantageusement compris entre 3 et 20) par exemple $D_4$ ;
* et/ou d'halogénopolyorganosiloxanes tels que le $\alpha,\omega$-chlorodiméthylsilylpolydiméthylsiloxane.
* et/ou de POS à extrémités trialkylsilyles, tels que le $\alpha,\omega$-triméthylsilylpolydiméthylsiloxane.

Concernant l'ordre d'introduction des réactifs dans le milieu réactionnel, il est avantageux de mettre tout d'abord en présence le catalyseur et le réactif porteur de (Mo1) (e.g. alcoxysilane), le réacteur porteur de (Mo2) (e.g. halogénosilane) n'étant incorporé qu'après un intervalle de temps plus ou moins long.

Le procédé selon l'invention permet, grâce à la compréhension du mécanisme de réaction secondaire, de maîtriser le phénomène de réticulation, ainsi que les rapports D/T et/ou D/Q et le taux de fonction OR dans les résines obtenues. Cela offre la possibilité de modeler, à souhait, la viscosité et la volatilité des résines, ainsi que leur rhéologie.

Pour ce faire, l'invention propose, avec succès, de choisir certains catalyseurs métalliques particuliers, de préférence, $ZrCl_4$ et d'ajuster la température réactionnelle ainsi que le ratio initial OR/X. Une partie du mérite de l'invention est de tenir compte des homocondensations Si-OR/Si-OR indésirables.

Les exemples d'hétérocondensation non hydrolytique SiCl/SiOMe qui suivent permettront de mieux comprendre le procédé selon l'invention et feront bien ressortir ses nombreux avantages et variantes de mise en oeuvre.

## EXEMPLES

### I - Contre-exemple liminaire : Préparation de résines en présence de $FeCl_3$

Dans ce contre-exemple, ont été préparés des résines polysiloxanes méthoxylées composées d'unités D et T (notées DT(OMe)) et d'unités D et Q (notées DQ(OMe)) en utilisant comme catalyseur le chlorure ferrique, $FeCl_3$. La concentration en catalyseur choisie est de 0,1 mole de $FeCl_3$ pour 100 moles de silicium, la température de réaction est de 110 °C ; les réactions sont effectuées en tube scellé pour éviter la distillation des réactifs.

1) Résine D/T(OMe)
Rapport D / T visé: 0,50
Taux de fonctions OMe par atome de silicium visé: (OMe / Si)final = 0,8
Stoechiométrie de la réaction :
$3{,}72\ MeSi(OMe)_3 + 2\ MeSiCl_3 + 1{,}86\ Me_2Si(OMe)_2 + Me_2SiCl_2$
ratio OMe/Cl = 1,86
2) Résine D/Q (OMe)
Rapport D/Q visé : 2
Taux de fonctions OMe par atome de silicium visé: (OMe / Si)final = 0,8
Stoechiométrie de la réaction :
$3{,}72\ Me_2Si(OMe)_2 + 2\ Me_2SiCl_2 + 1{,}86\ Si(OMe)_4 + SiCl_4$
OMe/Cl= 1,86

Il est à noter que dans les deux cas les formules brutes théoriques des résines visées sont identiques:
$Si\ Me_{1.33}\ (OMe)_{0.80}O_{0.932}$.

Le taux d'oxygène pontant par silicium est inférieur à 1, donc inférieur au taux dans les polysiloxanes linéaires ou cycliques (O/Si = 1). On attend donc des résines de très bas poids moléculaire, liquides et de faible viscosité. Cependant, dans les deux cas, une résine solide a été obtenue. Différents essais réalisés à pression atmosphérique à 60

°C, avec un condenseur refroidi à -30°C, et en utilisant un gaz de balayage de pureté élevée (< 5 ppm en $H_2O$), ont conduit au même résultat.

Par analyse des gaz formés lors de la condensation (C.P.V./ spectrométrie de masse et R.M.N.$^1$H) on a pu mettre en évidence la formation de diméthyléther, $Me_2O$, en plus du chlorure de méthyle attendu. La formation de $Me_2O$ provient de la condensation entre deux groupements méthoxy :

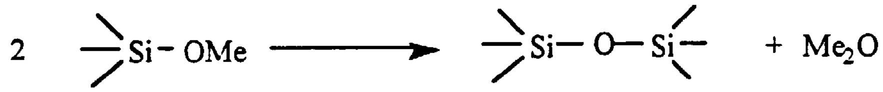

La prise en masse observée dans les réactions précédentes peut donc être attribuée à cette réaction secondaire qui conduit à la formation de ponts siloxanes et donc à l'augmentation du taux de réticulation de la résine.

Cette réaction secondaire n'est pas envisagée dans la littérature concernant les réactions de condensation Si-OR / Si-Cl. Dans le cas des alcoxysilanes, la condensation Si-OR / Si-OR n'est décrite qu'à des températures beaucoup plus élevées, de l'ordre de 300 °C **US N° 2 731 485**, même en présence d'acide de Lewis. Ainsi, il a pu être vérifié que les méthoxysilanes utilisés ($Si(OMe)_4$, $MeSi(OMe)_3$ et $Me_2Si(OMe)_2$) ne réagissaient pas dans nos conditions (110 °C et 0,1% $FeCl_3$) en l'absence de chlorosilanes. De même, on n'observe pas de réaction en présence de MeCl. Par contre, lorsque l'on ajoute une faible quantité de chlorosilane (0,1 équivalent) on observe un dégagement important de $Me_2O$, qui cesse quand les fonctions Si-Cl sont consommées.

| Réaction (à 110°C, 0,1% $FeCl_3$) | $[Me_2O]/[MeCl]$ |
|---|---|
| $Me_2Si(OMe)_2$ + 0,1 $Me_2SiCl_2$ | 0,85 |
| $MeSi(OMe)_3$ + 0,1 $MeSiCl_3$ | 0,68 |
| $Si(OMe)_4$ + 0,1 $SiCl_4$ | 0,37 |

**II - Première série de catalyseurs sélectionnés**

Il a donc été montré que l'on forme du $Me_2O$ au cours de la réaction thermique entre un méthoxy et un chlorosilane, en présence de catalyseur $FeCl_3$, et ce quelles que soient les unités D, T ou Q utilisées. Cette réaction secondaire conduit à l'augmentation du taux de réticulation des résines et peut entraîner la prise en masse des résines. De plus les deux produits MeCl et $Me_2O$ ont des points d'ébullition identiques, et leur séparation est délicate.

Les catalyseurs sélectionnés pour remédier au problème technique mis en lumière par l'invention, à savoir l'homocondensation parasite SiOR/SiOR, l'ont été grâce au protocole d'essai donné ci-après.

On fait réagir le diméthoxydiméthylsilane et le dichlorodiméthylsilane, dans les proportions 10 / 1 en présence de divers catalyseurs acides de Lewis. L'utilisation de composés difonctionnels est proposée à titre d'exemple pour éviter des problèmes de transfert de matière avec des masses plus élevées. On évite ainsi le risque de prise en masse des résines typique des réacteurs en tube scellé où l'on ne peut avoir d'agitation et dans lesquels il convient donc de ne pas avoir de milieu réactionnel trop visqueux. Il avait par ailleurs, été montré que la formation de $Me_2O$ est maximale pour des unités D. De plus, on utilise un excès de méthoxysilane pour favoriser, s'il y a lieu, la formation de $Me_2O$ et faciliter sa détection. Les différents catalyseurs sont utilisés en quantité de 1% molaire du nombre total de moles de silicium. La réaction est effectuée à 110°C, en tube scellé, et le rapport $[Me_2O]/[MeCl]$ en fin de réaction (c'est-à-dire lorsque toutes les liaisons Si-Cl ont été consommées) est déterminé par RMN du proton.

Le taux d'avancement de la réaction est donné (par rapport au MeCl formé) après x heures à 110°C.

Les différents résultats obtenus pour les catalyseurs sélectionnés sont rassemblés dans le tableau 1 ci-dessus.

TABLEAU 1

| Catalyseur | $[Me_2O]/[MeCl]$ | Taux d'avancement |
|---|---|---|
| Témoin $FeCl_3$ 1% | ca 2.8 | 79% (23 h) |
| Carboxylate de Zr 1% | 0.25 | 40% (16 h) |
| $ZrCl_4$ 1% | 0.23 | 67% (22h 30 min) |
| $TiCl_4$ 1% | 0.03 | 60% (63h) |

Les résultats obtenus montrent que la sélectivité dépend du catalyseur utilisé. La formation de $Me_2O$ est maximale dans le cas de $FeCl_3$. Le tétrachlorure de titane $TiCl_4$ est le catalyseur le plus sélectif, avec moins de 3% de $Me_2O$ détecté (limite de sensibilité de l'analyse). Mais dans ce cas, la réaction est très lente (60% de conversion des liaisons Si-Cl en 63 h, contre 56% pour $FeCl_3$ 0,1% en 16 h 30 min).

A partir de ces données, il apparaît que les catalyseurs offrant le meilleur compromis entre vitesse de condensation et sélectivité sont : le tétrachlorure de zirconium et le carboxylate de zirconium.

**III - Deuxième série de catalyseurs sélectionnés**

La réaction choisie pour sélectionner cette deuxième série de catalyseurs est la suivante :

$$0{,}4\ Me_2SiCl_2 + 0{,}6\ Si(OMe)_4 \xrightarrow[130\ ^{o}C]{Cat.\ 1\ \%} Me_{0,8}Si(OMe)_{1,6}O_{0,8} + 0{,}8\ MeCl$$

On cherche l'activité et la sélectivité les meilleures. On cherche en particulier à éviter la réaction secondaire de formation de diméthyléther, qui est importante avec un catalyseur à base de chlorure ferrique.

$$2 \equiv SiOMe \rightarrow \equiv Si\text{-}O\text{-}Si \equiv + MeOMe$$

On enregistre les différents taux d'avancement de la réaction à partir de la R.M.N. $^1H$ en tube scellé ainsi que la sélectivité de la réaction à partir du rapport $[Me_2O]/[MeCl]$.

Les résultats obtenus sont rassemblés dans le tableau 2 ci-après.

Les dérivés du zirconium présentent le meilleur compromis sélectivité / activité.

Le tétrachlorure de zirconium conduit à un avancement de 89 % en seize heures avec très peu de diméthyléther formé. On retrouve approximativement la même activité au départ d'un acloxyde de zirconium $Zr(OEt)_4$.

L'activité du catalyseur dépend de la température. La conversion des liaisons SiCl est totale en 25 heures à 140 °C et en une heure trente à 200 °C. Le pourcentage de diméthyléther formé à 140 °C est de 3,5 % et augmente sensiblement à 200 °C soit 7 %.

TABLEAU 2

| CATALYSEUR | $[Me_2O]/[MeCl]$ | TAUX D'AVANCEMENT DE LA REACTION |
|---|---|---|
| Témoin FeCl3 (1‰) | 0,200 | 60,0% (16 h) |
| $TiCl_4$ | ≤ 0,010 | 30,0% (16 h) |
| $TiBr_4$ | ≤ 0,010 | 29,0% (16 h) |
| $(PhO)_2TiCl_2$ | 0,036 | 49,0% (15 h 15 min) |
| $CpTiCl_3$ | ≤ 0,010 | 2,4% (15 h 15 min) |
| $Cp_2VCl_2$ | ≤ 0,010 | 40,8% (16 h) |
| $VCl_3$ | ≤ 0,010 | 2,4% (16 h) |
| $VOCl_3$ | ≤ 0,010 | 25,0% (16 h) |
| $ZrCl_4$ | 0,037 | 88,9% (16 h) |
| $ZrBr_4$ | 0,040 | 73,6% (16 h) |
| $Zr(OEt)_4$ | 0,040 | 80,8% (16 h) |
| $Cp_2ZrCl_2$ | ≤ 0,010 | 24,4% (16 h) |
| $Cp_2ZrHCl$ | 0,050 | 72,0% (16 h) |
| $Cp_2ZrMe_2$ | 0,030 | 30,0% (16 h) |
| $(C_5Me_5)_2ZrCl_2$ | ≤ 0,010 | 4,8% (16 h) |
| $(C_5Me_5)ZrCl_3$ | 0,025 | 91,6% (16 h) |
| $CpZrCl_3$, 2THF | 0,032 | 90,7% (16 h) |
| $HfCl_4$ | 0,070 | 96,7% (16 h) |
| $NbCl_5$ | 0,045 | 36,0% (16 h) |
| Cp = Cyclopentadiényle | | |

**IV - Préparation de résines D/Q(OMe) en présence de $TiCl_4$ et de $ZrCl_4$**

L'objectif visé est ici d'obtenir par catalyse avec $ZrCl_4$ (1%), les résines D/T(OMe) et D/Q(OMe) qui n'ont pas pu être préparées précédemment dans l'exemple (I) avec $FeCl_3$. Les réactions ont été effectuées à 110 °C, en tube scellé.

1) Résine D/T(OMe)
Stoechiométrie de la réaction :
3,72 $MeSi(OMe)_3$ + 2 $MeSiCl_3$ + 1,86 $Me_2Si(OMe)_2$ + $Me_2SiCl_2$
OMe/Cl = 1,86
2) Résine (D/Q)OMe
Stoechiométrie de la réaction :
3,72 $Me_2Si(OMe)_2$ + 2 $Me_2SiCl_2$ + 1,86 $Si(OMe)_4$ + $SiCl_4$
OMe/Cl = 1,86

Avec $ZrCl_4$, la résine obtenue est un produit très légèrement visqueux, à l'aspect d'une huile. Le rapport des concentrations $[Me_2O]/[MeCl]$ en fin de réaction et le $t_{1/2}$, temps au bout duquel la moitié des liaisons Si-Cl a réagi, sont donnés dans le tableau 3 suivant:

TABLEAU 3

| RÉSINE (D/T) | | RÉSINE (D/Q) | |
|---|---|---|---|
| $[Me_2O]/[MeCl]$ | $t_{1/2}$ | $[Me_2O]/[MeCl]$ | $t_{1/2}$ |
| 0,034 | 15 h | 0,060 | 10 h |

On constate que dans les conditions réelles de réaction la formation de $Me_2O$ est très minoritaire. La réaction secondaire est négligeable devant la réaction de condensation conduisant à la formation de MeCl. Cette sélectivité élevée permet un bon contrôle du taux de réticulation des résines. Le taux de condensation est excellent dans les deux cas : supérieur à 99 %, après 64 heures à 110°C pour la résine D / T et 40 heures pour la résine D/Q.

**V - Influence de la température**

La réactivité et la sélectivité de $TiCl_4$ et $ZrCl_4$ ont été comparées à différentes températures. Cette étude a été effectuée pour des résines D/Q(OMe) contenant 60% d'unités Q.
Stoechiométrie de la réaction :
0,40 $Me_2SiCl_2$ + 0,60 $Si(OMe)_4$
La composition finale visée est donc : $SiMe_{0,8}(OMe)_{1,6}O_{0,8}$
Conditions: tubes scellés ; 1 mole de catalyseur pour 100 moles de silicium.
Les résultats obtenus sont résumés dans le tableau 4 suivant.

TABLEAU 4

| Catalyseur | $ZrCl_4$ | | | | $TiCl_4$ | | | |
|---|---|---|---|---|---|---|---|---|
| Température | 150 °C | 125 °C | 140 °C | 200 °C | 105 °C | 125 °C | 140 °C | 200 °C |
| $t_{1/2}$ (h) | 10 | 2,5 | 1.5 | / | 104 | 37 | 28 | / |
| $t_{(fin\ de\ réaction)}$ (h) | 125 | 100 | 25 | 1,5 | >230 | >160 | >160 | 25 |
| $[Me_2O]/[MeCl]$ | 0,03 | 0,04 | 0,04 | 0,08 | 0,01 | 0,015 | 0,02 | 0,08 |
| $\%Me_2O$ (p/p) | 3 | 3,5 | 3,5 | 7 | 1 | 1,3 | 2 | 7 |

Ce tableau montre que la réactivité augmente avec la température. $TiCl_4$ est très sélectif entre 105 °C et 140 °C, mais la durée de réaction est longue. A 200 °C, la durée de réaction est plus raisonnable (24h), mais la sélectivité est moins élevée, avec un rapport $[Me_2O]/[MeCl]$ de 0,08. $ZrCl_4$ apparait plus intéressant, puisque la sélectivité à 140 °C est meilleure ($[Me_2O]/[MeCl]$ = 0,04) pour la même durée de réaction.

Il est à noter que pour la composition 0,40 $Me_2SiCl_2$ + 0,60 $Si(OMe)_4$ utilisée ici, l'équilibre de redistribution est atteint (d'après la RMN du proton) en moins de 18h ($ZrCl_4$) ou 30h ($TiCl_4$) à température ambiante et en moins de 1h dans les deux cas à 105 °C.

**VI - Essai avec évacuation des gaz formés**

Dans cet essai réalisé en vidangeant les gaz formés en cours de réaction, on a mis en oeuvre la même composition, avec $ZrCl_4$ 1% à 140 °C. L'avancement de la réaction (estimé à partir des intégrations des méthyles sur le silicium), le rapport molaire $[Me_2O]/[MeCl]$ et le pourcentage en poids de $Me_2O$ sont donnés dans le tableau 5 suivant :

TABLEAU 5

| temps (h) | 0 | 1 | 2,5 | 4,5 | 7 | 8,75 | 24,5 |
|---|---|---|---|---|---|---|---|
| $SiMe_2Cl/SiMe_2$ | 1,08 | 0,84 | 0,30 | 0,16 | 0,06 | 0,04 | <0,01 |
| ° avt estimé (%) | 0 | 45 | 70 | 75 | 85 | 95 | >98 |
| $[Me_2O]/[MeCl]$ | / | / | 0,035 | 0,042 | 0,055 | 0,056 | 0,10 |
| $\%Me_2O$ (p/p) | / | / | 3,1 | 3,7 | 4,8 | 4,9 | 8,3 |

La réaction semble légèrement plus rapide qu'en tube scellé (à t = 7 h, $SiCl/SiMe_2 = 0,12$ en tube scellé à 140 °C). Le taux de $Me_2O$ augmente au cours de la réaction, sans doute à cause de l'augmentation du rapport Si-OMe/Si-Cl. Cependant, le taux moyen de $Me_2O$ estimé en "intégrant" % $Me_2O$ = f (degré d'avancement) est de 3,3% environ, donc très proche de celui observé en tube scellé à la même température (3,5%).

**Commentaires :**

Les exemples I à VI montrent l'intérêt de la condensation non hydrolytique entre méthoxy et chlorosilanes dans la préparation de résines liquides méthoxylées composées d'unités D et Q ou D et T.

On a mis en évidence l'intervention de réactions de condensation entre deux fonctions méthoxysilanes avec élimination d'éther méthylique, conduisant à une augmentation du taux de réticulation des résines. Il a été montré que la sélectivité dépend du catalyseur utilisé, de la température, du rapport OMe/Cl initial et du nombre de groupement méthyles sur le silicium. En présence de $FeCl_3$, qui est un des catalyseurs les plus employés en condensation SiOR/SiCl, cette réaction secondaire ne permet pas d'obtenir les résines visées (prise en masse).

Par contre l'utilisation de catalyseurs à base de métaux des groupes IIIB, IVB et VB, de préférence à base de Zr permet de préparer ces résines avec des temps de réaction raisonnables et un faible taux de $Me_2O$.

**VII - Synthèse d'autres résines DQ (OMe)**

**A** - Plusieurs résines $DQ^{(OMe)}$[VII.1 à VII.3] ont été synthétisées selon ce procédé avec un alkyl = halogénosilane et un trétraalcoxysilane :

$Me_2SiCl_2$ / $Si(OMe)_4$

La synthèse de ces résines DQ(OR) a été effectuée dans un réacteur de 1 litre de type réacteur "bombe" prolabo (inox), en comparaison des essais en tube scellé.

La réaction est la suivante : (D/Q = 50 / 50).

$$n\ Si(OMe)_4 + n\ Me_2SiCl_2 \rightarrow 2n\ MeSi(OMe)O_{2/2} + 2n\ MeCl$$

*Trois essais VII.1 à VII.3 ont été réalisés:*

VII.1 n = 0,01; 7 h 145 °C ; tube scellé

VII.2 n = 0,01 ; 24 h 130 °C ; tube scellé avec barreau inox

VII.3 n = 0,89 ; 2 h 165 °C ; 38 bars : viscosité de la résine finale 70 mPa ; TTSiCl > 98 %.

**R.M.N.$^{29}$ Si : % Si**

| | VII.1 | VII.2 | VII.3 |
|---|---|---|---|
| $D(OR)^2$ | 4,4 | 4,5 | 4,6 |
| D(OR) | 19 | 19,7 | 19 |

| | | | |
|---|---|---|---|
| D | 25,7 | 23,5 | 25,6 |
| $Q(OR)^4$ | 0,4 | 0,2 | 0,3 |
| $Q(OR)^3$ | 3 | 3,8 | 2,9 |
| $Q(OR)^2$ | 12,3 | 13,9 | 11,6 |
| Q(OR) | 22,2 | 22,2 | 22,7 |
| Q | 13 | 12,2 | 13,3 |
| D/Q | 49,1/50,9 | 47,7/52,3 | 49,2/50,8 |

Il est possible à partir de ces valeurs d'intégration de R.M.N. de déterminer la répartition des fonctions méthoxy sur les unités D et Q.

On obtient une résine de formule

$$[Me_2Si(OMe)_{0,566}O_{0,717}]_{0,491}[Si(OMe)_{1,128}O_{1,436}]_{0,509} \quad \text{(VII.1)}$$

La probabilité de trouver des fonctions Si(OMe) autour des siliciums des unités D et Q est donnée par :

$$p^{(DOMe)} = N_{Si(-OMe)}/N_{fonc.} = 0,566/2 = 0,283 \text{ et } p^{(DOSi)} = 1 - p^{(DOMe)} = 0,717$$

$$p^{(QOMe)} = N_{Si(-OMe)}/N_{fonc.} = 1,128/4 = 0,282 \text{ et } p^{(QOSi)} = 1 - p^{(QOMe)} = 0,718$$

les fonctions Si-OMe se distribuent sur les unités D ou Q indifféremment, de façon purement aléatoire. C'est la même chose pour les ponts siloxanes.

Il est alors possible de calculer les pourcentages des différents sites D(OMe)2, D(OMe), D et Q(OMe)x ($0 \leq x \leq 4$) en supposant une distribution parfaitement aléatoire des Si-OMe.

On aura :

% $D(OMe)^2$ = $[p^{(DOMe)}]^2 \times 100$
% $D^{(OMe)}$ = $2 \times [p^{(DOMe)}][p^{(D-OSi)}] \times 100$
% D = $[p^{(DOSi)}]^2 \times 100$
% $Q(OMe)^4$ = $[p^{(QOMe)}]^4 \times 100$
% $Q(OMe)^3$ = $4 [p^{(QOMe)}]^3 [p^{(QOSi)}] \times 100$
% $Q(OMe)^2$ = $6 [p^{(QOMe)}]^2 [p^{(QOSi)}]^2 \times 100$
% Q(OMe) = $4 [p^{(QOMe)}][p^{(QOSi)}]^3 \times 100$
% Q = $[p^{(QOSi)}]^4 \times 100$

Les pourcentages expérimentaux déduits du spectre R.M.N. sont en accord avec les données statistiques.

| Groupe | $D(OR)^2$ | D(OR) | D | $Q(OR)^4$ | $Q(OR)^3$ | $Q(OR)^2$ | Q(OR) | Q |
|---|---|---|---|---|---|---|---|---|
| % stat | 8 | 40,6 | 51,4 | 0,6 | 6,4 | 24,6 | 41,8 | 26,6 |
| % VII.1 | 8,8 | 38 | 51,4 | 0,8 | 5,9 | 24,2 | 43,6 | 25,5 |
| % VII.3 | 9 | 38 | 51,2 | 0,6 | 5,8 | 23,2 | 45,4 | 26,4 |

**B** - Comparaison avec un procédé hydrolytique

On synthétise trois résines (VII.4 à VII.6)

Deux résines par la voie non hydrolytique (SiCl/SiOMe) avec un rapport D/Q = 39/61 (VII. 4) et 63/37 (VII. 5).

Une résine par un procédé hydrolytique (VII.6)

avec un rapport D/Q = 66/33 à partir de $Si(OMe)_4$ et $D_4$ = octaméthylcyclotétrasiloxane (cata H+)

On obtient les valeurs de R.M.N. exprimées ci-après :

| **R.M.N.$^{29}$ Si : % Si** | | | |
|---|---|---|---|
| | VII.4 | VII.5 | VII.6 |
| $D(OR)^2$ | 7,2 | 1,7 | 0,9 |

(suite)

| R.M.N.$^{29}$ Si : % Si | | | |
|---|---|---|---|
| | VII.4 | VII.5 | VII.6 |
| D(OR) | 19,5 | 20,1 | 21,6 |
| D | 12,3 | 41,8 | 45 |
| $Q(OR)^4$ | 3,0 | 0 | 5,6 |
| $Q(OR)^3$ | 13,8 | 1,0 | 16,8 |
| $Q(OR)^2$ | 23,9 | 7,2 | 8,8 |
| Q(OR) | 16,0 | 18,0 | 1,2 |
| Q | 3,5 | 10,3 | 0 |
| D/Q | 39/61 | 63,6/36,4 | 67,5/32,5 |
| VII.4: $[Me_2Si(OMe)_{0,869}O_{0,565}]_{0,39}[Si(OMe)_{1,92}O_{1,04}]_{0,61}$<br>VII.5: $[Me_2Si(OMe)_{0,369}O_{0,815}]_{0,635}[Si(OMe)_{0,97}O_{1,515}]_{0,365}$<br>VII.6: $[Me_2Si(OMe)_{0,347}O_{0,827}]_{0,675}[Si(OMe)_{2,818}O_{1,591}]_{0,325}$ | | | |

On a alors les probabilités suivantes :

| | VII.4 | VII.5 | VII.6 |
|---|---|---|---|
| $p^{(DOMe)}$ | 0,435 | 0,185 | 0,174 |
| $p^{(DOSi)}$ | 0,565 | 0,815 | 0,826 |
| $p^{(QOMe)}$ | 0,484 | 0,243 | 0,705 |
| $p^{(QOSi)}$ | 0,516 | 0,757 | 0,295 |

Le procédé hydrolytique VII.6 conduit à des probabilités complètement différentes de rencontrer une terminaison Si-OMe sur des motifs D ou sur des motifs Q. On a un énorme excès de terminaison Si(OMe) sur les motifs Q.

**Revendications**

**1.** Procédé de préparation de résines polyorganosiloxanes (POS), éventuellement alcoxylées (OR), par condensation non hydrolytique au moins entre des motifs alcoxysilyles (Mo1) et des motifs halogénosilyles (Mo2) portés tous deux par des silanes identiques (homocondensation) ou différents (hétérocondensation), en présence d'un catalyseur du type acide de Lewis, ladite condensation engendrant essentiellement des liaisons ≡ Si-O-Si ≡ et des coproduits XR (X = halogène)
caractérisé

en ce que les POS visés comprennent des unités siloxyles D, T et/ou Q voire M,
en ce que le catalyseur est choisi parmi les composés métalliques ou les mélanges de ceux-ci, à base d'au moins un métal appartenant au groupe IIIB, IVB ou VB de la classification périodique, donnée dans "LA CHIMIE - dictionnaire Encyclopédique" J. Angenault - Ed DUNOD 08/91.
et en ce que la température réactionnelle et le ratio initial OR/X sont ajustés de telle sorte que la condensation intervienne sensiblement exclusivement entre les motifs Mo1 et Mo2 avec une extrême minimisation de la condensation parasite entre deux alcoxy OR, donnant le sous-produit $R_2O$.

**2.** Procédé selon la revendication 1 caractérisé en ce que les composés métalliques utiles comme catalyseur de condensation non hydrolytique, sont :

- des carboxylates,
- des des halogénures,
- des (cyclo)alkylhalogénures,
- des alcoxydes,
- des oxyhalogénures,
- ou leurs mélanges.

**3.** Procédé selon la revendication 1 ou 2, caractérisé en ce que le catalyseur est sélectionné dans la liste suivante : $TiCl_4$, $TiBr_4$, $(PhO)_2$, $TiCl_2$, $CpTiCl_3$, $Cp_2VCl_2$, $VCl_3$, $VOCl_3$, $ZrCl_4$, $ZrBr_4$, $Zr(OEt)_4$, $Cp_2ZrCl_2$, $Cp_2ZrHcl$, $Cp_2ZrMe_2$, $(C_5Me_5)_2$, $ZrCl_2$, $(C_5Me_5)ZrCl_3$, $(C_5Me_5)ZrCl_3$, $CpZrCl_3$/2-tétrahydrofurane, $HfCl_4$, $NbCl_5$ et leurs mélanges ; les dérivés du Zirconium étant plus particulièrement préférés.

**4.** Procédé selon l'une quelconque des revendications 1 à 3, caractérisé en ce que la température réactionnelle est avantageusement fixée à une valeur comprise entre 70 et 210 °C, de préference entre 100 et 180 °C et plus préférentiellement encore entre 130 et 150 °C.

**5.** Procédé selon l'une quelconque des revendications 1 à 4, caractérisé en ce que l'on sélectionne le catalyseur et l'on ajuste la température réactionnelle de manière à ce que le taux moyen de $R_2O$, reste inférieur à 10 % en poid, de préférence à 5 % en poids et, plus préférentiellement encore, à 4 % en poids par rapport au coproduit RX.

**6.** Procédé selon l'une quelconque des revendications 1 à 5, caractérisé en ce que l'on met en oeuvre des silanes susceptibles de donner naissance après condensation à des unités siloxyles D et T ou D et Q ainsi qu'un catalyseur à base de Zr et l'on fixe le ratio molaire r = OR /X initial en deçà ou au dessus d'une valeur charnière $r_c$ selon que l'on vise à obtenir une résine solide ou liquide respectivement.

**7.** Procédé selon la revendication 6, caractérisé en ce que $r_c$ est environ égal à 1,35.

**8.** Procédé selon l'une quelconque des revendications 1 à 7, caractérisé en ce que la condensation non hydrolytique considérée est effectuée en vase clos.

**9.** Procédé selon l'une quelconque des revendications 1 à 8, caractérisé en ce que l'on prévoit une vidange des gaz formés en cours de réaction.

**10.** Procédé selon l'une quelconque des revendications 1 à 9, caractérisé en ce que l'on met en oeuvre comme produits de départ :

* au moins un alcoxysilane répondant à la formule suivante :

$$(R^1)_{4-n}\,Si(OR)_n$$

avec R, $R^1$ identiques ou différents et représentant l'hydrogène ou un radical hydrocarboné, de préférence alkyle et/ou alcényle et/ou aryle et plus préférentiellement encore méthyle, éthyle ou propyle, butyle, phényle (méth)acrylate, époxydé, ou vinylique, le méthyle étant plus particulièrement préféré, et n = 1 à 4.

* et au moins un halogénosilane de formule :

$$R^2{}_{4-m}\,Si(X)_m$$

avec X = halogène de préférence Cl, $R^2$ répondant à la même définition que celle donnée supra pour R, $R^1$ et m = 1 à 7.

**11.** Procédé selon l'une quelconque des revendications 1 à 10, caractérisé en ce que, outre les motifs (Mo1) et (Mo2), la condensation fait intervenir des motifs métalliques (Mo3) amenés, de préférence, par des réactifs choisis parmi les alcoxydes et/ou les sels métalliques,

les éléments métalliques préférés étant selectionnés dans la liste suivante : lanthanides, titane, fer, zirconium et leurs mélanges.

**12.** Procédé selon l'une quelconque des revendications 1 à 10, caractérisé en ce que, outre les silanes, on fait intervenir à titre de réactifs de départ :

* des POS cycliques, de préférence des oligomères Dt, dans lesquels t représente le nombre d'atomes de silicium du cycle et est compris entre 3 et 20;
* et/ou des halogénopolyorganosiloxanes ;
* et/ou des POS à extrémités trialkylsilyles.

Office européen des brevets

# RAPPORT DE RECHERCHE EUROPEENNE

Numero de la demande
EP 96 42 0031

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 578 494 (MARKO ET AL)<br>* revendications 1,7,18 * | 1 | C08G77/06<br>C08G77/08 |
| A,D | US-A-2 695 307 (GUILISSEN ET AL)<br>* revendications 1,3,4 * | 1 | |
| A,D | US-A-2 731 485 (WAGNER ET AL)<br>* colonne 1 - colonne 2 * | 1 | |
| A | US-A-2 485 928 (SERVAIS)<br>* revendication 1 * | 1 | |

DOMAINES TECHNIQUES RECHERCHES (Int.Cl.6)
C08G

Le présent rapport a été établi pour toutes les revendications

| Lieu de la recherche | Date d'achèvement de la recherche | Examinateur |
|---|---|---|
| LA HAYE | 15 Mai 1996 | Lentz, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)